# FASCICULE DE BREVET EUROPEEN

(11) **EP 1 136 354 B1**
(45) Date de publication et mention de la délivrance du brevet: **28.04.2004**
(21) Numéro de dépôt: 01400567.2
(22) Date de dépôt: 05.03.2001
(51) Int. Cl.: B64C 27/51, F16F 13/08, F16F 9/10

(54) **Amortisseur de vibrations notamment pour rotor d'hélicoptère**
Schwingungsdämpfer, insbesondere für einen Hubschrauberrotorarm
Vibration damper, in particular for an helicopter rotor

(30) Priorité: 20.03.2000 FR 0003526
(43) Date de publication de la demande: 26.09.2001
(73) Titulaire: HUTCHINSON, 75008 Paris (FR)
(72) Inventeur: Levallard, Patrice, 94360 Bry sur Marne (FR); Sieg, Thierry, Encinitas, CA 92024 (US); Runfola, Marc, 92130 Issy les Moulineaux (FR)
(74) Mandataire: Jacquard, Philippe Jean-Luc

(56) Documents cités:
- FR-A- 2 754 579
- US-A- 5 374 039

## Description

La présente invention a pour objet un amortisseur de vibrations, notamment pour rotor d'hélicoptère, comprenant un élément menant ayant un axe dit axe principal et destiné à être entraîné par un élément d'entraînement, ainsi qu'un élément rigide destiné à être monté sur une structure, et comportant un ensemble d'amortissement reliant fonctionnellement l'élément menant et l'élément rigide pour amortir les vibrations dans au moins une direction perpendiculaire audit axe principal.

La demande de Brevet Français FR 2 754 579 déposée par la Société Demanderesse le 15 Octobre 1996 et publiée le 17 Avril 1998, décrit un amortisseur de ce type dans lequel l'ensemble d'amortissement comporte, d'une part, un dispositif hydraulique d'amortissement disposé dans une cavité de fluide visqueux et d'autre part un dispositif flexible présentant une raideur élevée dans une direction parallèle audit axe principal et une faible raideur dans la direction perpendiculaire à l'axe principal. Le dispositif hydraulique d'amortissement est constitué par un premier et un deuxième ensembles de lames planes dont chacune a son plan perpendiculaire à l'axe principal, le premier ensemble étant solidaire de l'élément menant et le deuxième ensemble étant solidaire de l'élément rigide, les lames du premier et du deuxième ensembles étant disposées de manière imbriquée et étant étroitement espacées de manière à présenter des zones d'amortissement visqueux situées chacune entre une lame du premier ensemble et une lame du deuxième ensemble.

Le dispositif d'amortissement à lames planes imbriquées tel que décrit dans la demande précitée permet d'obtenir de bonnes performances et une bonne linéarité pour des vibrations de faible ou de moyenne amplitude. Cependant, au fur et à mesure que les amplitudes de débattement augmentent, la vitesse relative des lames tend également à augmenter, ce qui entraîne une augmentation du cisaillement et une diminution de la viscosité dynamique, ce qui fait que l'amortissement procuré par le dispositif hydraulique tend à baisser.

On connaît par ailleurs des dispositifs d'amortissement visqueux qui permettent d'obtenir un amortissement élevé pour des débattements de grande amplitude puisque l'amortissement procuré est proportionnel au carré de la vitesse, mais ils présentent par contre une faible efficacité pour des faibles amplitudes.

La présente invention se propose de réaliser un amortisseur de vibrations, notamment pour rotor d'hélicoptère, qui présente un amortissement satisfaisant à la fois pour les débattements de basse amplitude et de haute amplitude.

Selon un premier aspect, l'idée de base de l'invention est de concevoir l'amortisseur de telle sorte que, pour les faibles amplitudes, l'amortissement soit essentiellement réalisé grâce à des ensembles de lames tel que définies ci-dessus, alors que, pour de fortes amplitudes, c'est un dispositif de type à amortissement visqueux qui vient compléter et/ou réaliser l'amortissement.

L'amortisseur de vibrations selon l'invention est ainsi caractérisé en ce que le dispositif hydraulique d'amortissement comporte également un élément d'amortissement qui est disposé dans une dite cavité de fluide visqueux et qui est solidaire de l'élément menant, ledit élément d'amortissement présentant une section se rétrécissant depuis une base située du côté d'une extrémité axiale de l'amortisseur jusqu'à un sommet situé du côté des ensembles de lames planes précitées.

A basse amplitude, l'élément d'amortissement est relativement écarté de la paroi de la ou des cavités et l'amortissement est majoritairement procuré par les ensembles de lames. Par contre, à forte amplitude, le dispositif flexible tend à se déformer et au fur et à mesure que les amplitudes augmentent, le contour externe de l'élément d'amortissement se rapproche au moins localement de la paroi de la cavité d'où une augmentation de l'effet d'amortissement visqueux dans la direction où se produit la déformation, d'une part, en raison du fait que la section de passage se rétrécit et d'autre part, en raison de la non-linéarité de cet effet qui, comme on l'a vu ci-dessus, est proportionnel au carré de la vitesse.

En particulier, l'élément d'amortissement s'inscrit dans un contour de déformation maximale de la surface interne du dispositif flexible. Préférentiellement, le contour extérieur de l'élément d'amortissement est inscrit à une distance prédéterminée dudit contour de déformation maximale du dispositif flexible.

Avantageusement, le contour externe de l'élément d'amortissement présente une section formée par des segments de droite inclinés par rapport audit axe principal.

De manière préférentielle, le sommet de l'élément d'amortissement est elliptique et la base est un cercle, ou un cercle interrompu par des segments de droite.

Il est particulièrement avantageux que l'élément d'amortissement soit creux et présente une cavité de compensation de volume qui communique avec au moins une dite cavité de fluide visqueux et dans laquelle est disposé un élément de compensation de volume, en particulier une membrane élastique.

De préférence, lorsque l'amortisseur est porté à sa température minimale de fonctionnement, la membrane élastique ne forme pas de pli et reste à distance d'une paroi interne de l'élément d'amortissement.

Le contour externe d'au moins une cavité de fluide visqueux peut être allongé selon une première direction. Au moins la base de l'élément d'amortissement peut être allongée selon une deuxième direction perpendiculaire à la première direction. Ceci permet d'obtenir des caractéristiques d'amortissement différentes selon les première et deuxième directions, avec un débattement plus important dans la première direction

Selon un deuxième aspect, l'invention concerne un amortisseur de vibrations, notamment pour rotor d'hélicoptère, du type comprenant un élément menant ayant un axe dit axe principal et destiné à être entraîné par un élément d'entraînement ainsi qu'un élément rigide destiné à être monté sur une structure, et qui comprend un ensemble d'amortissement reliant fonctionnellement l'élément menant et l'élément rigide pour amortir les vibrations dans au moins une direction perpendiculaire audit axe principal, l'ensemble d'amortissement comprenant d'une part un dispositif hydraulique d'amortissement disposé dans au moins une cavité de fluide visqueux et d'autre part un dispositif flexible présentant une raideur élevée dans une direction parallèle audit axe principal et une faible raideur dans ladite direction perpendiculaire à l'axe principal.

Un dispositif de ce type est décrit dans la Demande Française précitée et il présente un dispositif de compensation de volume. Les dispositifs de compensation de volume sont utilisés de longue date dans les systèmes hydrauliques, notamment sous forme d'accumulateurs hydrauliques, par exemple OLAER ou LEDUC, et ils le sont également depuis longtemps dans les amortisseurs de vibrations précités. Dans la Demande Française précitée, le dispositif de compensation de volume présente une membrane ondulée, dont une face est en contact avec le fluide de la cavité et dont l'autre face est en contact avec une cavité contenant du gaz. Ce dispositif présente l'inconvénient d'une certaine vulnérabilité de la membrane.

Selon son deuxième aspect, l'invention se propose de remédier à ce problème, et à cet effet l'amortisseur de vibrations est caractérisé en ce qu'il présente une cavité de compensation de volume qui communique avec au moins une dite cavité de fluide visqueux et à l'intérieur de laquelle est disposée une membrane élastique dont une paroi interne délimite une cavité de volume variable remplie par un gaz, et dont une paroi externe, qui délimite avec une paroi interne de ladite cavité de compensation de volume, une cavité de fluide de compensation, la membrane élastique étant disposée à une distance déterminée non nulle de ladite paroi interne, et sans former de pli, lorsque l'amortisseur de vibrations est à sa température minimale de fonctionnement prévu par ses spécifications.

De la sorte, on assure une efficacité de la compensation de volume dans toutes les conditions où l'amortisseur est susceptible de se trouver et d'autre part la paroi interne de la cavité de compensation permet d'assurer une protection de la membrane élastique.

La cavité de compensation est avantageusement formée à l'intérieur d'une pièce creuse évasée s'étendant entre le dispositif hydraulique d'amortissement et une extrémité axiale de l'amortisseur.

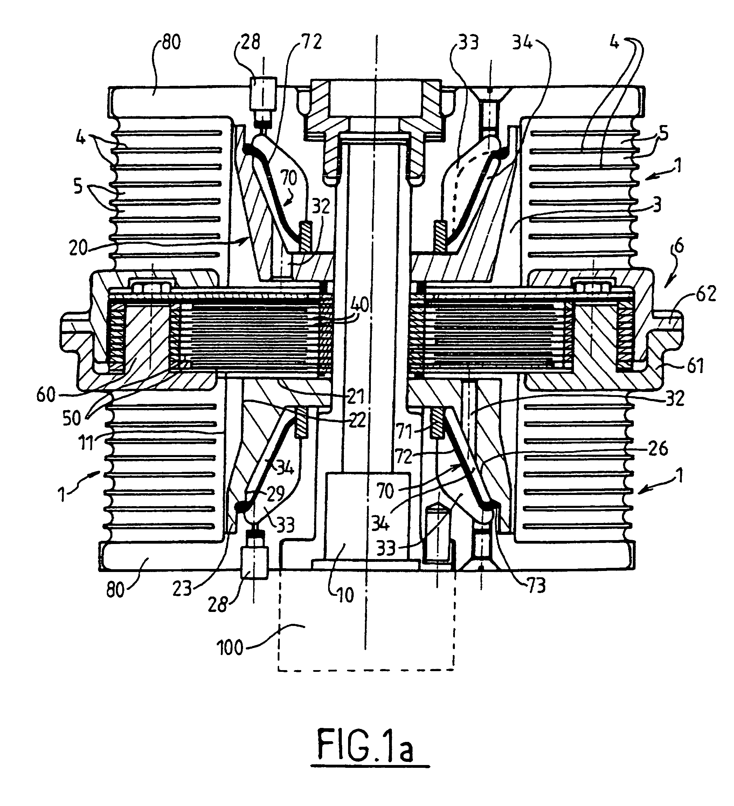

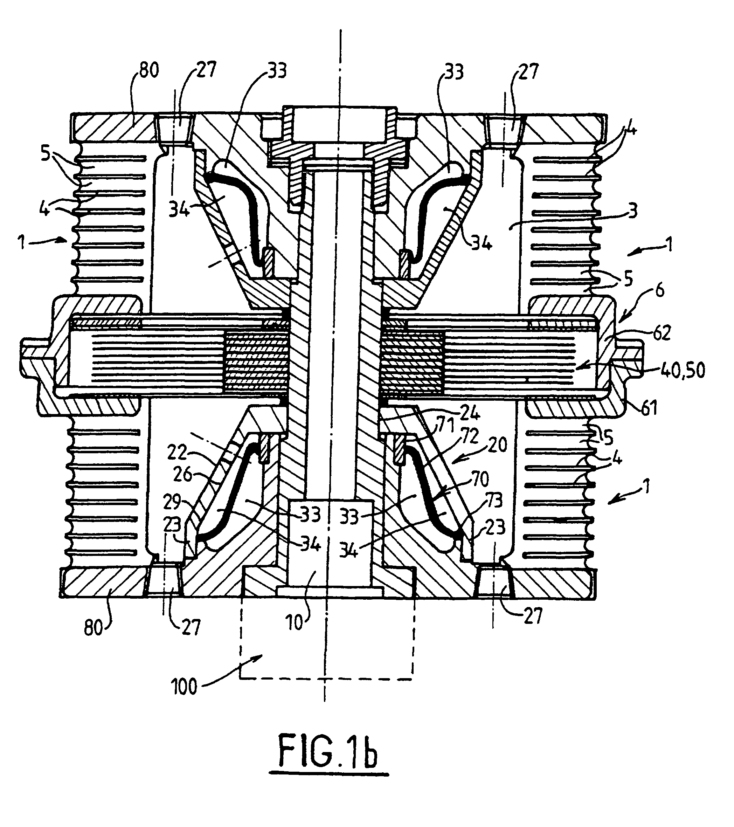

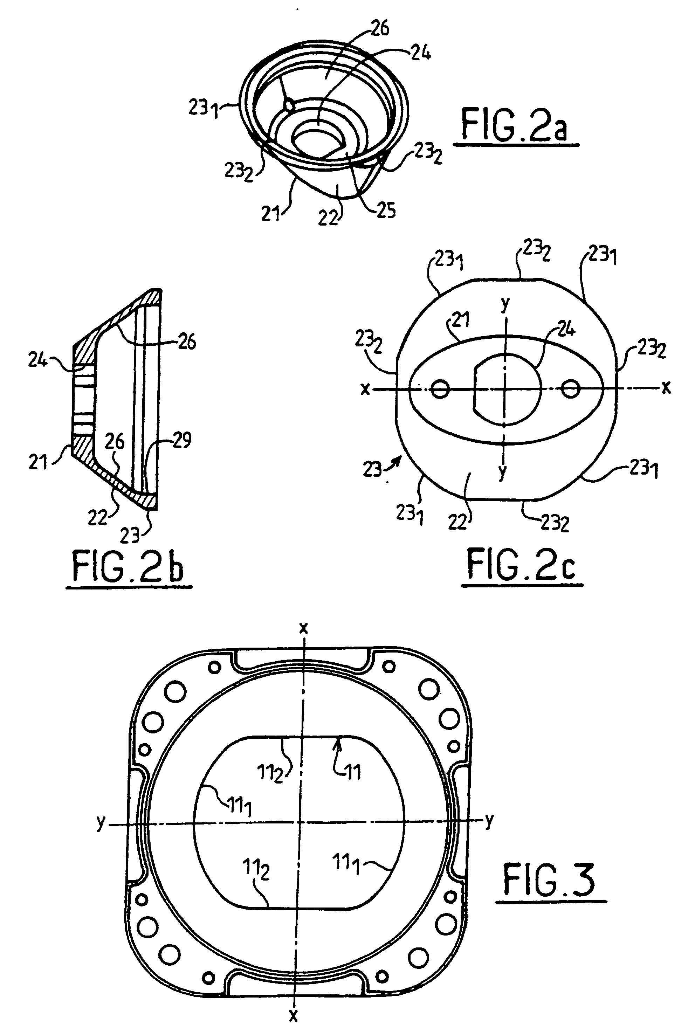

D'autres caractéristiques et avantages de l'invention apparaîtront mieux à la lecture de la description qui va suivre, donné à titre d'exemple non limitatif, en liaison avec les dessins dans lesquels :
■ Les figures 1a et 1b représentent deux coupes longitudinales dans des plans perpendiculaires d'un amortisseur selon un mode de réalisation préféré de l'invention ;
■ Les figures 2a à 2c représentent respectivement en perspective, en coupe et en vue de dessus un élément d'amortissement selon un mode préféré de réalisation de l'invention ;
■ La figure 3 illustre le contour externe de la ou des cavités des fluides.

Comme le montrent les figures la et 1b, l'amortisseur de vibrations présente un élément menant 10 dont l'axe ZZ est l'axe principal de l'amortisseur et qui est destiné à être entraîné par un élément d'entraînement 100. Un premier ensemble de lames 40 est solidaire, à un découplage près, de l'élément menant 10 alors qu'un deuxième ensemble de lames 50 imbriqué avec le premier ensemble est solidaire, à un découplage près d'un élément rigide 6. Dans l'exemple représenté, un découplage des excitations de compression est obtenu grâce à un recouvrement partiel des lames, mais cette fonction pourrait être réalisée par tout autre moyen décrit dans la Demande FR 2 754 579 précitée.

Dans l'exemple représenté, la structure est symétrique par rapport à un plan médian perpendiculaire à l'axe principal de l'élément menant 10. L'ensemble de lames 40 et 50 est disposé en position médiane et est centré par rapport à un dispositif flexible 1 qui comporte une structure lamifiée constituée d'un empilement de rondelles métalliques 4 et de rondelles en élastomère 5 dont le plan est perpendiculaire à l'axe du cylindre 10. La structure lamifiée 1 présente un contour interne 11 qui délimite le contour externe de deux cavités 3 situées de part et d'autre de l'ensemble de lames 40 et 50 et qui sont remplies d'un fluide visqueux qui baigne également les lames et l'espace situé entre celles-ci de manière à procurer l'amortissement recherché.

A sa partie supérieure et à sa partie inférieure, c'est-à-dire à ses extrémités axiales, le dispositif est refermé par des couvercles 80 auxquelles sont solidarisées des éléments d'amortissement 20 qui comportent un sommet 21 situé à proximité de l'ensemble de lames 40 et 50, et une base 23, le sommet 21 et la base 23 étant reliés par un contour extérieur 22 qui s'évase progressivement du sommet 21 vers la base 23.

Avantageusement, l'élément d'amortissement 20 est creux et délimite une cavité d'amortissement séparée en deux cavités d'air 33 et de fluide 34 par une membrane 70 logée à son sommet 71 au voisinage d'une face interne 25 de l'élément 20 et qui est pincée à sa base 73 entre la base 23 de l'élément d'amortissement 20 et le couvercle 80. La membrane 70 présente une région active 72 qui longe une paroi interne évasée 26 qui délimite vers l'extérieur la cavité 34. La cavité de fluide 34 communique avec la cavité 3 par une ou plusieurs ouvertures 31 afin de procurer l'effet de compensation de volume recherché.

On notera également les ouvertures 27 permettant le remplissage des cavités 3, ainsi que les ouvertures 28 pour le remplissage en gaz des cavités 33 correspondant à l'intérieur des membranes élastiques 70, par exemple en élastomère. Ce remplissage peut impliquer une pressurisation du gaz. Le système de compensation peut être tout système élastique, par exemple un système associant un piston et ressort.

On notera également les plaques d'assemblage 60 situées de part et d'autre des ensembles de lames 40 et 50 et qui présentent des ouvertures 63 (figure 1b) de passage du fluide visqueux remplit les cavités 3. Des entretoises 42 permettent d'assurer l'empilement du couvercle 80, des éléments d'amortissement 20 et des ensembles 40 et 50 de lames le long de l'axe 10 alors que, sur la partie externe des brides complémentaires 61 et 62 servent à l'assemblage au niveau du dispositif flexible lamifié 1 où l'empilement étant également assuré grâce au couvercle 80.

L'élément d'amortissement 20 est préférentiellement réalisé sous la forme d'une coupe qui présente un sommet 21 présentant une ouverture centrale circulaire 24 et un contour externe sensiblement elliptique 21 ainsi qu'une base 23 présentant des portions de cercle 23₁ reliées entre elles par des segments de droite 23₂.Le contour extérieur 22 présente en coupe des segments de droite qui relient le contour elliptique du sommet 21 et le contour de la base 23.

Le contour extérieur évasé 22 permet d'inscrire l'élément 20 dans le contour des déformations maximales du dispositif lamifié 1 dans les conditions de fonctionnement les plus sévères, mais ceci avec un jeu qui est choisi en fonction de l'amortissement désiré. De ce fait, on est certain d'une part que le contour externe 22 de l'élément d'amortissement 20 ne viendra jamais en contact avec le contour interne 11 des structures lamifiées 1 et ce même dans les conditions de fonctionnement les plus sévères, et que l'élément d'amortissement 20 apportera un effet d'amortissement important pour des débattements de grande amplitude.

Comme représenté à la figure 3, le contour 11 qui définit l'extérieur des cavités 3 présente une forme allongée limitée aux extrémités par des arcs de cercle 11₁ qui se raccordent par des segments de droite 11₂. On a indiqué à la figure 2c par XX le grand axe de l'ellipse 21 et par YY son petit axe et on a reporté ces directions à la figure. 3 pour indiquer la position relative de la pièce 20 par rapport à l'élément 1. La coupe de la figure la est réalisée selon le plan contenant l'axe XX et l'axe ZZ, alors que la coupe de la figure 1b est réalisée selon le plan contenant l'axe YY et l'axe ZZ. La direction YY correspond aux plus grands débattements possibles de l'élément d'amortissement.

Comme le montrent plus particulièrement les figures 1a et 1b, à la température minimale de fonctionnement, la partie active 72 de la membrane élastique 70 suit la paroi interne 26 de l'élément 20 à une distance résiduelle donnée et sans former de pli, ce qui permet de maintenir l'efficacité de la compensation de volume dans toutes les conditions de fonctionnement. A température ambiante (20°C), la membrane 70 occupe la position représentée en pointillés à la figure la. Au fur et à mesure que la température baisse, le fluide visqueux se contracte, et cette contraction produit une diminution du volume des cavités 34. Du fait que la membrane 70 ne présente pas de pli, elle se contracte de manière uniforme et vient longer la paroi 26 sans former de pli. L'absence de pli à la température minimale de fonctionnement permet d'éviter que la membrane 70 ne vienne localement en contact avec la paroi interne 26, ce qui diminuerait l'efficacité de la compensation de volume en isolant une partie de la cavité de fluide 34.

## Revendications

1. Amortisseur de vibrations, notamment pour rotor d'hélicoptère, comprenant un élément menant (10) ayant un axe dit axe principal et destiné à être entraîné par un élément d'entraînement (100) ainsi qu'un élément rigide (6) destiné à être monté sur une structure, et comportant un ensemble d'amortissement reliant fonctionnellement l'élément menant (10) et l'élément rigide (6) pour amortir les vibrations dans au moins une direction perpendiculaire audit axe principal, l'ensemble d'amortissement comportant d'une part un dispositif hydraulique d'amortissement disposé dans au moins une cavité (3) de fluide visqueux et d'autre part un dispositif flexible (1) présentant une raideur élevée dans une direction parallèle audit axe principal et une faible raideur dans ladite direction perpendiculaire à l'axe principal, **caractérisé en ce qu'**il présente au moins une cavité de compensation de volume, qui communique avec au moins une dite cavité (3) de fluide visqueux, et à l'intérieur de laquelle est disposée une membrane élastique (70) dont une paroi interne délimite une cavité de volume variable (33) remplie par un gaz et dont une paroi externe délimite avec une paroi interne (26) de ladite cavité de compensation de volume, une cavité de fluide de compensation (34), et **en ce que** la membrane élastique (70) est disposée à une distance déterminée non nulle de ladite paroi interne (26) et sans former de pli lorsque l'amortisseur de vibrations est à sa température minimale de fonctionnement.

2. Amortisseur selon la revendication 1, **caractérisé en ce que** la cavité de compensation est formée à l'intérieur d'une pièce creuse évasée (20) s'étendant entre le dispositif hydraulique d'amortissement et une extrémité axiale de l'amortisseur.

## Claims

1. Vibration damper, in particular for a helicopter rotor, comprising a driving element (10) having a shaft referred to as the main shaft and intended to be driven by a drive element (100) as well as a rigid element (6) intended to be mounted on a structure, and comprising a damping assembly functionally connecting the driving element (10) and the rigid element (6) in order to damp the vibrations in at least one direction perpendicular to the said main shaft, the damping assembly comprising firstly a hydraulic damping device disposed in at least one viscous fluid cavity (3) and secondly a flexible device (1) having high stiffness in a direction parallel to the said main shaft and a low stiffness in the said direction perpendicular to the main shaft, **characterised in that** it has at least one volume compensation cavity which communicates with at least one said viscous fluid cavity (3), and inside which there is disposed an elastic membrane (70), an internal wall of which delimits a variable-volume cavity (33) filled with a gas and an external wall of which delimits, with an internal wall (26) of the said volume compensation cavity, a compensation fluid cavity (34), and **in that** the elastic membrane (70) is disposed at a given non-zero distance from the said internal wall (26) without forming a fold when the vibration damper is at its minimum operating temperature.

2. Damper according to Claim 1, **characterised in that** the compensation cavity is formed inside a splayed hollow piece (20) extending between the hydraulic damping device and an axial end of the damper.

## Patentansprüche

1. Vibrationsdämpfer, insbesondere für einen Helikopterrotor, umfassend ein Führungselement (10), das eine als Hauptachse bezeichnete Achse hat und dazu bestimmt ist, über ein Antriebselement (100) angetrieben zu werden, als auch ein starres Element (6), das dazu vorgesehen ist, um auf einer Struktur montiert zu werden, und eine Dämpfungsanordnung aufweist, die funktionell das Führungselement (10) und das starre Element (6) verbindet, um die Vibrationen in wenigstens einer Richtung senkrecht zur genannten Hauptachse zu dämpfen, welche Dämpfungsanordnung zum einen eine hydraulische Dämpfungsvorrichtung umfasst, die in wenigstens einem Hohlraum (3) für ein Viskosefluid angeordnet ist, und zum anderen eine flexible Einrichtung (1) aufweist, die in einer Richtung parallel zur genannten Hauptachse eine erhöhte Steifheit und eine schwache Steifheit in dieser Richtung senkrecht zur Hauptachse aufweist, **dadurch gekennzeichnet, dass** sie wenigstens einen Raum zur Volumenkompensation aufweist, der mit wenigstens einem genannten Hohlraum (3) für das Viskosefluid kommuniziert und in dessen Innenraum eine elastische Membran (70) angeordnet ist, von der eine innere Wand einen Hohlraum variablen Volumens (33) begrenzt, der mit einem Gas gefüllt ist, und von der eine äußere Wand mit einer inneren Wand (26) dieses Hohlraums für die Volumenkompensation einen Kompensationshohlraum (34) für das Fluid begrenzt, und dass die elastische Membran (70) in einem Abstand ungleich Null von der inneren Wand (26) angeordnet ist und ohne eine Faltung zu bilden, wenn der Vibrationsdämpfer auf seiner minimalen Betriebstemperatur ist.

2. Dämpfer nach Anspruch 1, **dadurch gekennzeichnet, dass** der Kompensationsraum im Inneren eines hohlen, ausgeweiteten Teils (20) gebildet ist, das sich zwischen der hydraulischen Dämpfungseinrichtung und einem axialen Ende des Dämpfers erstreckt.
